(19) **Europäisches Patentamt / European Patent Office / Office européen des brevets**

(11) **EP 4 462 349 A1**

(12) **EUROPEAN PATENT APPLICATION**
published in accordance with Art. 153(4) EPC

(43) Date of publication:
**13.11.2024 Bulletin 2024/46**

(21) Application number: **22925654.0**

(22) Date of filing: **12.10.2022**

(51) International Patent Classification (IPC):
**G06T 3/00** (2024.01)

(52) Cooperative Patent Classification (CPC):
**G06N 3/0985; G06T 3/00; G06T 5/50; G06V 10/46; G06V 10/54; G06V 10/56; G06V 10/764; G06V 10/82**

(86) International application number:
**PCT/CN2022/124962**

(87) International publication number:
**WO 2023/151299 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.02.2022 CN 202210128358**

(71) Applicant: **Huawei Cloud Computing Technologies Co., Ltd.**
**Gui'an New District, Guizhou 550025 (CN)**

(72) Inventors:
• **LU, Ruizhi**
**Guizhou 550025 (CN)**
• **LUO, Wenjie**
**Guizhou 550025 (CN)**
• **XIE, Yi**
**Guizhou 550025 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **DATA GENERATION METHOD AND APPARATUS, DEVICE, AND STORAGE MEDIUM**

(57) A data generation method and apparatus, a device, and a storage medium are provided, and relate to the field of artificial intelligence technologies. The method includes: obtaining a sub-image of a first image, where the sub-image includes a to-be-transferred object obtained from the first image through cropping (601); determining contour information of the to-be-transferred object in the sub-image (602); and performing style transfer on the to-be-transferred object in the first image based on the contour information and a reference style, to obtain a second image, where a background area of the second image is the same as that of the first image, and the background area is an area other than the to-be-transferred object in the first image (603). According to the solution of the method, style transfer is performed on a to-be-transferred object in an image. Therefore, background information of the image is not damaged, and data quality is good.

Obtain a sub-image of a first image, where the sub-image includes a to-be-transferred object obtained from the first image through cropping — 601

Determine contour information of the to-be-transferred object in the sub-image — 602

Perform style transfer on the to-be-transferred object in the first image based on the contour information and a reference style image, to obtain a second image, where a background area of the second image is the same as that of the first image, and the background area is an area other than the to-be-transferred object in the first image — 603

FIG. 6

## Description

This application claims priority to Chinese Patent Application No. 202210128358.7, filed on February 11, 2022 and entitled "DATA GENERATION METHOD AND APPARATUS, DEVICE, AND STORAGE MEDIUM", which is incorporated herein by reference in its entirety.

## TECHNICAL FIELD

This application relates to the field of artificial intelligence (artificial intelligence, AI) technologies, and in particular, to a data generation method and apparatus, a device, and a storage medium.

## BACKGROUND

In the artificial intelligence field, an algorithm generalization problem often occurs in a model. The algorithm generalization problem means that, due to a difference between distribution of training data and test data, performance of a model obtained through training by using the training data in a scenario of the training data is better than that of the model in a scenario of the test data. For example, the model is trained based on an image shot in daytime. Detection performance of the model for the image shot in the daytime is better than detection performance of the model for an image shot at night. To enable a model to adapt to more scenarios, data of the scenarios needs to be collected.

Currently, some image transformation technologies are used to obtain training data. For example, there is an image of a scenario A, and a detection model is obtained through training based on the image of the scenario A. To enable the detection model to be applicable to image detection of a scenario B, an algorithm model may be used to transform a style of the image of the scenario A to a style of the scenario B, and content of the image does not change. For example, there is currently a red green blue (red green blue, RGB) image in a daytime scenario, and a style image of a night scenario is given. The RGB image in the daytime scenario may be transformed into an image of the night scenario, and content of the image does not change. In this way, an image of the scenario B is obtained. The model is trained by using the image of the scenario B generated by using an algorithm, so that the model is applicable to the image detection of the scenario B.

In existing technologies, style transfer is performed on an entire image, and background information of the image is damaged. Consequently, data is unrealistic, and data quality is poor.

## SUMMARY

This application provides a data generation method and apparatus, a device, and a storage medium, so that quality of data obtained through style transfer is good.

According to a first aspect, this application provides a data generation method. The method includes: obtaining a sub-image of a first image, where the sub-image includes a to-be-transferred object obtained from the first image through cropping; determining contour information of the to-be-transferred object in the sub-image; and performing style transfer on the to-be-transferred object in the first image based on the contour information and a reference style, to obtain a second image, where a background area of the second image is the same as that of the first image, and the background area is an area other than the to-be-transferred object in the first image.

In the solution shown in this application, the sub-image of the first image is obtained, and then the contour information of the to-be-transferred object in the sub-image is determined. The style transfer is performed on the to-be-transferred object in the first image based on the contour information and the reference style, so that only the to-be-transferred object is transferred in an image obtained through the style transfer, and a background area is not damaged. Therefore, quality of the image obtained through the style transfer can be good. In addition, because the sub-image includes a small quantity of objects, the contour information of the to-be-transferred object is determined in the sub-image, so that the determined contour information can be accurate.

In a possible implementation, the reference style indicates appearance information obtained by performing the style transfer on the to-be-transferred object, where the appearance information includes one or more of a color, a texture, brightness, or illumination.

In a possible implementation, the obtaining a sub-image of a first image includes: sending an unlabeled sample image to a terminal, where the sample image includes an object whose type is the same as that of the to-be-transferred object; receiving label information that is sent by the terminal and that is added by a user to the object in the sample image; determining location information of a selection box of the to-be-transferred object in the first image based on the sample image and the label information; and obtaining the sub-image from the first image through cropping based on the location information of the selection box.

In the solution shown in this application, the user may add the label information to the sample image in an interactive manner, determine the location information of the selection box of the to-be-transferred object in the first image based on the sample image and the label information, and obtain the sub-image of the first image through cropping based on the location information of the selection box. In this way, the location information of the selection box of the to-be-transferred object in the first image can be obtained based on the sample image labeled by the user.

In a possible implementation, the determining contour information of the to-be-transferred object in the sub-image includes: performing salient object detection on the sub-image, to obtain the contour information of the to-be-transferred object in the sub-image.

In the solution shown in this application, the salient object detection is performed on the sub-image, to obtain the contour information of the to-be-transferred object in the sub-image. In this way, a salient object detection technology aims to detect a salient object occupying a subject position in an image, and is not bound to an object category. Therefore, the salient object detection technology may be universally used to detection of any object. Therefore, the style transfer can be performed on an object in any image by using the solution of this application, and universality is good.

In a possible implementation, the performing style transfer on the to-be-transferred object in the first image based on the contour information and a reference style, to obtain a second image includes: performing the style transfer on the to-be-transferred object in the sub-image based on the contour information and the reference style, to obtain a locally style-transferred image corresponding to the sub-image; and pasting the locally style-transferred image to the first image, to obtain the second image.

In the solution shown in this application, the style transfer is performed on the to-be-transferred object in the sub-image, to obtain the locally style-transferred image corresponding to the sub-image, and then the local style image is pasted to the first image, to obtain the image obtained through the style transfer. In this way, a style transfer method can be provided.

In a possible implementation, the performing the style transfer on the to-be-transferred object in the sub-image based on the contour information and the reference style, to obtain a locally style-transferred image corresponding to the sub-image includes: performing the style transfer on the sub-image based on the reference style, to obtain a locally style-transferred image corresponding to the sub-image; and fusing the style-transferred image corresponding to the sub-image and the sub-image based on the contour information, to obtain the locally style-transferred image corresponding to the sub-image, where the style transfer occurs in an area indicated by the contour information in the locally style-transferred image.

In the solution shown in this application, the style transfer is performed on the entire sub-image, to obtain the style-transferred image corresponding to the sub-image, and the style-transferred image and the sub-image are fused based on the contour information, to obtain the locally style-transferred image corresponding to the sub-image. The style transfer occurs in the area indicated by the contour information in the locally style-transferred image. In this way, a locally style-transferred image on which the style transfer is only performed on the to-be-transferred object can be obtained through the fusing.

In a possible implementation, the method further includes: sending the locally style-transferred image to the terminal; obtaining pixel correction information that is sent by the terminal and that is used by the user to correct the area in which the style transfer occurs in the locally style-transferred image, where the pixel correction information includes at least one of a missing-detection pixel and a falsely detected pixel; correcting the locally style-transferred image based on the pixel correction information, to obtain an updated locally style-transferred image; and pasting the updated locally style-transferred image to the first image, to obtain an updated second image.

In the solution shown in this application, the locally style-transferred image is sent to the terminal, so that the user corrects the locally style-transferred image, and the quality of the image obtained through the style transfer is improved.

In a possible implementation, the correcting the locally style-transferred image based on the pixel correction information, to obtain an updated locally style-transferred image includes: updating the contour information of the to-be-transferred object based on the pixel correction information, to obtain updated contour information; and fusing, based on the updated contour information, the style-transferred image corresponding to the sub-image and the sub-image, to obtain the updated locally style-transferred image.

In the solution shown in this application, when the locally style-transferred image is corrected, the updated contour information of the to-be-transferred object is first obtained, and then the locally style-transferred image corresponding to the sub-image is updated based on the updated contour information. In this way, because the contour information is updated, quality of the updated locally style-transferred image can be improved.

In a possible implementation, the sending the locally style-transferred image to the terminal includes: obtaining confidence of the locally style-transferred image, where the confidence is obtained based on at least one of confidence of the contour information of the to-be-transferred object and confidence of the style-transferred image corresponding to the sub-image; and determining that the confidence of the locally style-transferred image is less than a second threshold, and sending the locally style-transferred image to the terminal.

In the solution shown in this application, the locally style-transferred image corresponds to the confidence, and the confidence indicates quality of locally style-transferred image. When the confidence is low, the locally style-transferred image is sent to the terminal for the user to correct the locally style-transferred image, so that the user can selectively correct the locally style-transferred image. This saves human resources.

In a possible implementation, the sending the locally style-transferred image to the terminal includes: sending the second image to the terminal; and when a selection instruction of the to-be-transferred object in the second image sent by the terminal is received, sending the locally style-transferred image to the terminal.

In the solution shown in this application, the second image is first sent to the terminal, and the user may select the to-be-transferred object in the second image. After the selection instruction of the to-be-transferred object is detected, the locally style-transferred image of the to-be-transferred object is sent to the terminal. In this way, the user may selectively correct the locally style-transferred image of the to-be-transferred object in the image obtained through the style transfer.

In a possible implementation, before the obtaining a sub-image of a first image, the method further includes: sending a style transfer selection interface to the terminal, where the style transfer interface includes displaying a local style transfer option and a global style transfer option; and receiving a selection instruction sent by the terminal to the user for the local style transfer option.

In the solution shown in this application, the local style transfer option and the global style transfer option are displayed to the user, and the user chooses to perform the style transfer on a global image or chooses to perform the style transfer on a local area, so that the user can select at least one of the options to perform the style transfer.

In a possible implementation, the method further includes: updating an object AI model based on the second image, to obtain an updated AI model, where the object AI model is configured to detect or identify the to-be-transferred object in the first image, and the updated AI model is configured to detect or identify a to-be-transferred object obtained through the style transfer in the second image.

In the solution shown in this application, the AI model is updated by using the image obtained through the style transfer, so that the updated AI model can detect or identify the object obtained through the style transfer.

According to a second aspect, this application provides a data generation apparatus. The apparatus has a function of implementing any one of the first aspect or the optional manners of the first aspect. The apparatus includes at least one module, and the at least one module is configured to implement the data generation method according to any one of the first aspect or the optional manners of the first aspect.

According to a third aspect, this application provides a computer device. The computer device includes a memory and a processor connected to the memory. The memory is configured to store computer instructions. The processor is configured to execute the computer instructions, to enable the computer device to implement the data generation method according to any one of the first aspect or the optional manners of the first aspect.

According to a fourth aspect, this application provides a computer-readable storage medium. The storage medium stores at least one computer instruction, and the computer instruction is read by a processor to enable a computer device to perform the data generation method according to the first aspect.

According to a fifth aspect, this application provides a computer program product. The computer program product includes computer instructions, and the computer instructions are stored in a computer-readable storage medium. A processor of a computer device reads the computer instructions from the computer-readable storage medium, the processor executes the computer instructions, to enable the computer device to perform the data generation method according to any one of the first aspect or the optional manners of the first aspect.

## BRIEF DESCRIPTION OF DRAWINGS

FIG. 1 is a schematic diagram of an application scenario of an AI platform according to an example embodiment of this application;

FIG. 2 is a schematic diagram of an application scenario of an AI platform according to an example embodiment of this application;

FIG. 3 is a logical architectural diagram of data generation according to an example embodiment of this application;

FIG. 4 is a schematic structural diagram of a computer device according to an example embodiment of this application;

FIG. 5 is a logical architectural diagram of data generation according to an example embodiment of this application;

FIG. 6 is a schematic flowchart of a data generation method according to an example embodiment of this application;

FIG. 7 is a schematic logical diagram of image style transfer according to an example embodiment of this application;

FIG. 8 is a schematic logical diagram of determining location information of a selection box according to an example embodiment of this application;

FIG. 9 is a schematic logical diagram of selection box cropping according to an example embodiment of this application;

FIG. 10 is a schematic logical diagram of image style transfer according to an example embodiment of this application;

FIG. 11 is a schematic logical diagram of image style transfer according to an example embodiment of this application;

FIG. 12 is a schematic logical diagram of an updated locally style-transferred image according to an example embodiment of this application;

FIG. 13 is a schematic logical diagram of an updated AI model according to an example embodiment of this application; and

FIG. 14 is a schematic structural diagram of a data generation apparatus according to an example embodiment of this application.

## DESCRIPTION OF EMBODIMENTS

To make objectives, technical solutions, and advantages of this application clearer, the following further describes implementations of this application in detail with reference to the accompanying drawings.

The following describes some terms and concepts in embodiments of this application.

Style transfer of an image is processing of image transformation. A to-be-transferred image and a reference style are input, and an image obtained through the style transfer can be output. Content of the image obtained through the style transfer is the same as that of the to-be-transferred image, and a style of the image obtained through the style transfer is similar to that of a reference style image. The reference style is a style that is of the to-be transferred image after the style transfer is performed on the to-be-transferred image. The reference style may indicate appearance information obtained by performing the style transfer on a to-be-transferred object. The appearance information includes a color, a texture, luminance, illumination, or the like. This is not limited in this application.

Salient object detection is used to identify a most obvious object in an image or a video. Differences between the salient object detection and object detection are as follows. A result of the object detection is that a detection box including an object is identified, and a model is usually bound to an object category. A result of the salient object detection is a refined contour of an object, and a most obvious and salient object in an image or a video is usually detected through the salient object detection. Therefore, an algorithm model is irrelevant to an object category.

An AI model is a mathematical algorithm model for resolving an actual problem by using a machine learning idea. The AI model includes a large quantity of parameters and calculation formulas (or calculation rules). The parameters in the AI model are values obtained through AI model training by using a training dataset. For example, the parameter in the AI model is a weight of a calculation formula or a calculation factor in the AI model. The AI model further includes some hyper-parameters (hyper-parameters). The hyper-parameter may be used to guide AI model building or the AI model training. There are a plurality of types of the hyper-parameters, for example, a quantity of iterations (iterations) of the AI model training, a learning rate (leaning rate), a batch size (batch size), a quantity of layers of the AI model, and a quantity of neurons at each layer. The hyper-parameter may be a parameter obtained through the AI model training by using the training dataset, or may be a preset parameter. The preset parameter is not updated through the AI model training by using the training dataset.

The following describes the background.

In the AI field, an algorithm generalization problem often occurs in a model. The algorithm generalization problem means that, due to a difference between distribution of training data and test data, performance of a model obtained through training by using the training data in a scenario of the training data is better than that of the model in a scenario of the test data. For example, the model is trained based on an image shot in daytime. Detection performance of the model for the image shot in the daytime is better than detection performance of the model for an image shot at night. To enable a model to adapt to more scenarios, data of the scenarios needs to be collected.

Currently, some image transformation technologies are used to obtain training data. For example, an image of a scenario A is obtained, and a detection model is obtained through training based on the image of the scenario A. To enable the detection model to be applicable to image detection of a scenario B, an algorithm model may be used to transform a style of the image of the scenario A to a style of the scenario B, and content of the image does not change. In this way, an image of the scenario B is obtained. The model is trained by using the image of the scenario B generated by using an algorithm, so that the model is applicable to the image detection of the scenario B.

However, in conventional technologies, style transfer is performed on an entire image. Consequently, background information of the image is damaged, and style transfer of some refined local areas cannot be performed. For example, a detection model is obtained by training an image of a white safety helmet, and currently needs to adapt to a detection scenario of an image of a red safety helmet, and data of the red safety helmet needs to be obtained. If the entire image is transformed by using an object technology, a safety helmet object is transformed, and background information is also damaged. Consequently, data is unrealistic, and quality of the data is poor.

In this application, a sub-image including a to-be-transferred object is obtained from an image through cropping, and contour information of the to-be-transferred object is obtained from the sub-image. Style transfer is performed on the to-be-transferred object in a first image based on the contour information and a reference style, to obtain a second image obtained through the transfer. In this way, the style transfer is only performed on the to-be-transferred object, and the style transfer is not performed on a background area. Therefore, the obtained second image is realistic, and quality of the data is good.

The following describes an execution body and an application scenario of embodiments of this application.

Execution body:

In embodiments of this application, an execution body of a data generation method may be a data generation apparatus. For example, the data generation apparatus may be an AI platform. The AI platform is a platform that provides convenient AI development environments and convenient development tools for an AI developer and a user.

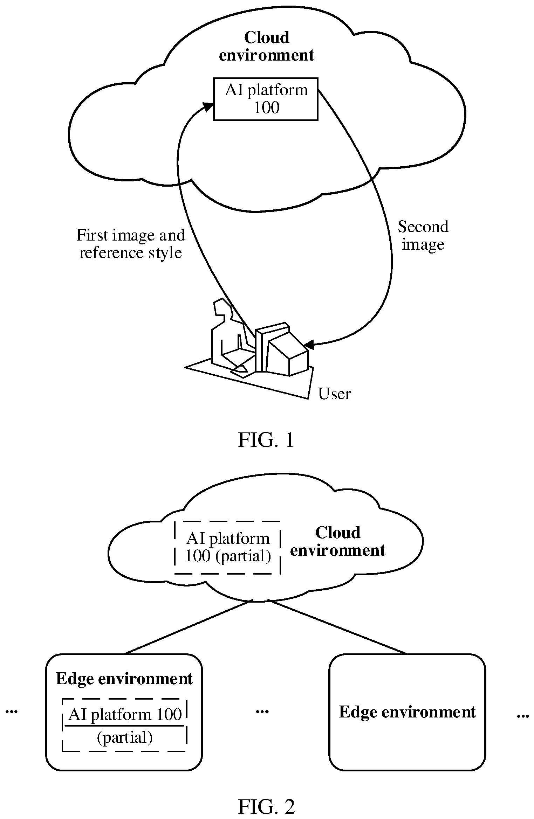

FIG. 1 is a schematic diagram of an application scenario of an AI platform 100 according to an embodiment of this application. As shown in FIG. 1, in an implementation, the AI platform 100 may be entirely deployed in a cloud environment. The cloud environment is an entity that uses a basic resource to provide a cloud service for a user in a cloud computing mode. The cloud environment includes a cloud data center and a cloud service platform. The cloud data center includes a large quantity of basic resources (including computing resources, storage resources, and network resources) owned by a cloud service provider. The computing resources included in the cloud data center may be a large quantity of computer devices, such as servers, and the like. The AI platform may be independently deployed on a server or a virtual machine in the cloud data center. Alternatively, the AI platform 100 may be deployed on a plurality of servers in the cloud data center in a distributed manner, deployed on a plurality of virtual machines in the cloud data center in a distributed manner, or deployed on a server and a virtual machine in the cloud data center in a distributed manner. As shown in FIG. 1, the AI platform 100 is abstracted by the cloud service provider into an AI cloud service on the cloud service platform and provided to the user. When the user uses the cloud service on the cloud service platform, the cloud environment provides an AI platform cloud service for the user by using the AI platform 100 deployed in the cloud data center. When using the AI platform cloud service, the user may upload information including a first image, a reference style, and a to-be-transferred object to the cloud environment by using an application programming interface (application programming interface, API) or a graphical user interface (graphical user interface, GUI). The AI platform 100 in the cloud environment receives content uploaded by the user, and performs style transfer on the to-be-transferred object in the first image, to obtain a second image.

Deployment of the AI platform 100 provided in this application is flexible. As shown in FIG. 2, in another implementation, an AI platform 100 provided in this application may be alternatively deployed in different environments in a distributed manner. The AI platform 100 provided in this application may be logically divided into a plurality of parts, and each part has a different function. For example, in an embodiment, the AI platform 100 includes a user interaction module 101, a determining module 102, and a style transfer module 103. Each part of the AI platform 100 may be separately deployed in any two or three environments of a terminal computing device, an edge environment, and a cloud environment. The terminal computing device includes a terminal server, a smartphone, a notebook computer, a tablet computer, a personal desktop computer, or the like. The edge environment is an environment that includes a set of edge computing devices close to the terminal computing device. The edge computing devices include an edge server, an edge station having a computing capability, and the like. The parts of the AI platform 100 deployed in different environments or devices cooperate to implement a data generation method. For example, in a scenario, the user interaction module 101 in the AI platform 100 is deployed in the terminal computing device, and the determining module 102 and the style transfer module 103 in the AI platform 100 are deployed in the edge computing devices in the edge environment. It should be understood that, an environment in which a part of the AI platform 100 is specifically deployed is not limited in this application. During actual application, adaptive deployment may be performed based on a computing capability of the terminal computing device, resource occupation statuses of the edge environment and the cloud environment, or specific application requirements.

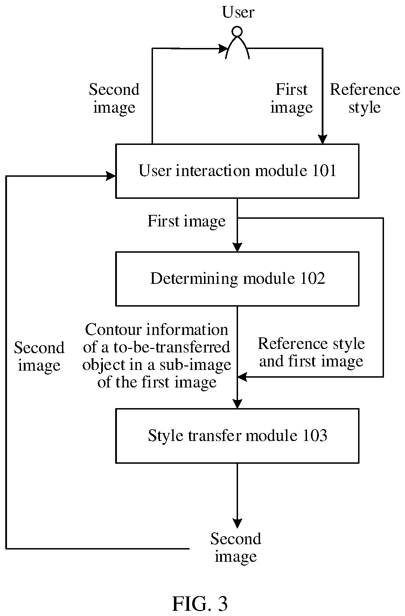

For example, when the AI platform 100 includes the user interaction module 101, the determining module 102, and the style transfer module 103, for a logical block diagram of a procedure of a data generation method, refer to FIG. 3. As shown in FIG. 3, the user interaction module 101 is used for interaction between the AI platform 100 and a user. For example, the user may input a first image, a reference style, and the like by using the user interaction module 101. The determining module 102 is configured to determine contour information and the like of a to-be-transferred object in a sub-image. The style transfer module 103 is configured to perform style transfer on the to-be-transferred object in the first image, to obtain a second image. Optionally, the reference style indicates appearance information obtained by performing the style transfer on the to-be-transferred object. The appearance information includes one or more of a color, a texture, brightness, or illumination.

Optionally, the user interaction module 101 is further used by the user to correct a style transfer result, and add label information and the like to a sample image.

Optionally, the style transfer module 103 is further configured to update the style transfer result based on pixel correction information of the user for the style transfer result. The style transfer module 103 is further configured to update an object AI model based on an object dataset and an image obtained through the style transfer, to obtain an updated AI model. The object dataset includes the first image. The object AI model, obtained through training based on the object dataset, can detect or identify an object included in an image in the object dataset. The updated AI model can detect or identify the image obtained through the style transfer and the object included in the object dataset.

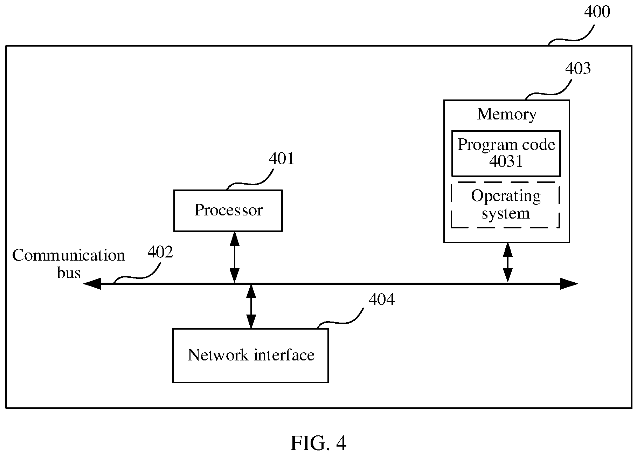

For example, the AI platform 100 may alternatively be independently deployed on one computer device in any environment (for example, independently deployed on one edge server in the edge environment). FIG. 4 is a schematic diagram of a hardware structure of a computer device 400 on which an AI platform 100 is deployed. As shown in FIG. 4, the computer device 400 is optionally implemented by using a general bus architecture. The computer device 400 includes at least one processor 401, a communication bus 402, a memory 403, and at least one network interface 404.

The processor 401 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions in this application. For example, the processor 401 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 402 is configured to transmit or receive information between the foregoing components. The communication bus 402 may be classified into an address bus, a data bus, a control bus, and the like. For ease of representation, only one thick line is used to represent the communication bus 402 in FIG. 4, but this does not mean that there is only one bus or only one type of bus.

The memory 403 is, for example, a read-only memory (read-only memory, ROM) or another type of static storage device that can store static information and instructions, or may be a random access memory (random access memory, RAM) or another type of dynamic storage device that can store information and instructions, or may be an electrically erasable programmable read-only memory (electrically erasable programmable read-only Memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, the memory 403 is not limited thereto. For example, the memory 403 exists independently and is connected to the processor 401 by using the communication bus 402. The memory 403 may alternatively be integrated with the processor 401.

The network interface 404 uses any apparatus such as a transceiver, and is configured to communicate with another device or a communication network. The network interface 404 includes a wired network interface, and may further include a wireless network interface. The wired network interface may be, for example, an Ethernet interface. The Ethernet interface may be an optical interface, an electrical interface, or a combination thereof. The wireless network interface may be a wireless local area network (wireless local area network, WLAN) interface, a network interface of a cellular network, a combination thereof, or the like.

During specific implementation, in an example, the processor 401 may include one or more CPUs.

During specific implementation, in an example, the computer device 400 may include a plurality of processors. Each of the processors may be a single-core processor (single-CPU), or may be a multi-core processor (multi-CPU). The processor herein may refer to one or more devices, circuits, and/or processing cores configured to process data (for example, computer program instructions).

During specific implementation, in an example, the computer device 400 may further include an output device and an input device. The output device communicates with the processor 401, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 401, and receives an input from a user in a plurality of manners. For example, the input device may be a mouse, a keyboard, a touchscreen device, a sensor device, or the like.

In some embodiments, the memory 403 is configured to store program code 4031 for executing data generation in this application, and the processor 401 executes the program code 4031 stored in the memory 403. In other words, the computer device 400 may implement the data generation method provided in the method embodiment by using the processor 401 and the program code 4031 in the memory 403.

Application scenario:

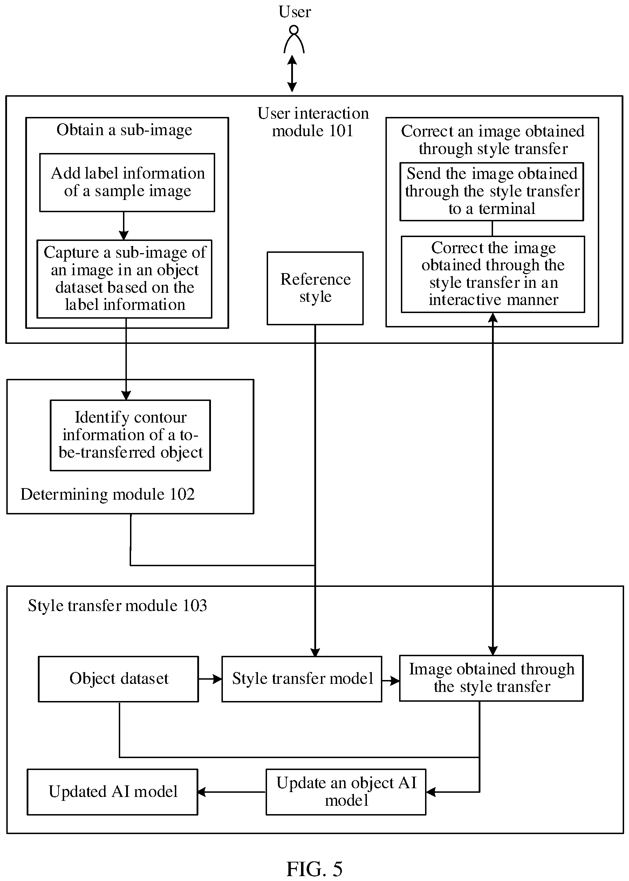

An example application scenario of embodiments of this application is briefly described with reference to the AI platform 100 shown in FIG. 3. Refer to FIG. 5. Currently, there is an object dataset and an object AI model obtained through training based on the object dataset. A user wants to enable the object AI model to detect or identify an image in another scenario. As shown in FIG. 5, the user uploads the object dataset, the object AI model, and a reference style to the AI platform 100 by using the user interaction module 101, and specifies an object on which style transfer needs to be performed in the object dataset. The object is referred to as a to-be-transferred object. The object dataset includes a first image mentioned below. The user adds label information to a small quantity of images in the object dataset by using the user interaction module 101. An image to which the label information is added is referred to as a sample image below. The determining module 102 in the AI platform 100 obtains, based on the label information, a sub-image through cropping from an unlabeled image included in the object dataset, and determines contour information of the to-be-transferred object in the sub-image. The style transfer module 103 in the AI platform performs the style transfer on the to-be-transferred object in all or a part of images in the object dataset, to obtain an image obtained through the style transfer. The user corrects the image obtained through the style transfer by using the user interaction module 101.

The style transfer module 103 in the AI platform updates the object AI model by using the object dataset and the image obtained through the style transfer, to obtain an updated AI model.

This is merely a possible application scenario. This is not limited in embodiments of this application.

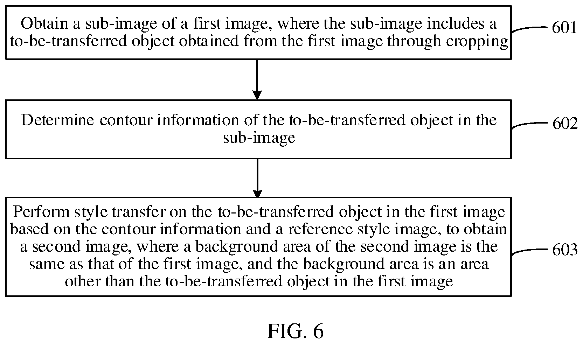

The following describes a specific procedure of the data generation method with reference to FIG. 6. Refer to step 601 to step 603. An example in which the method is performed by an AI platform is used for description, and a specific example in which style transfer is performed on a first image in an object dataset is used for description.

Step 601: Obtain a sub-image of a first image, where the sub-image includes a to-be-transferred object obtained from the first image through cropping.

The first image is an image on which style transfer is to be performed. The to-be-transferred object may be any specified object, for example, a safety helmet, a car, a bicycle, or the like. The to-be-transferred object is not specifically limited in this embodiment of this application.

In this embodiment, there is currently the first image and a reference style, and a style of the to-be-transferred object in the first image is different from the reference style. The style of the to-be-transferred object in the first image is expected to be transformed into the reference style. For example, the first image includes a safety helmet, and the to-be-transferred object is the safety helmet. A color of the safety helmet in the first image is red, and a color included in the reference style is white. The color of the safety helmet in the first image needs to be transformed into to a white color, to obtain an image including a white safety helmet. The AI platform obtains the sub-image of the first image from the first image through cropping, where the sub-image includes an image of the to-be-transferred object.

Optionally, the sub-image does not include an object other than the to-be-transferred object. For example, the sub-image includes the safety helmet, and does not include an object other than the safety helmet. In this way, when contour information of the to-be-transferred object is identified, the contour information can be more accurately identified.

It should be noted that, when the first image includes a plurality of to-be-transferred objects, sub-images are respectively obtained through cropping for the to-be-transferred objects. For example, the first image includes two to-be-transferred objects, and two sub-images are obtained from the first image through cropping.

For example, before step 601, that a user chooses to perform local style transfer on an image may be process as: sending a style transfer selection interface to a terminal, where the style transfer selection interface includes a local style transfer option and a global style transfer option; and receiving a selection instruction that is sent by the terminal and that is of the user for the local style transfer option.

In this embodiment, the AI platform sends the style transfer selection interface to the terminal. The style transfer selection interface includes the local style transfer option and the global style transfer option. The local style transfer option indicates to perform style transfer on a partial area of an image, and the global style transfer option indicates to perform style transfer on an entire image. The terminal displays the style transfer selection interface, and the user selects the local style transfer option. The terminal sends the selection instruction for the local style transfer option to the AI platform. The AI platform receives the selection instruction for the local style transfer option, and performs step 601.

In addition, if the user selects the global style transfer option, the AI platform receives a selection instruction for the global style transfer option, and inputs the first image and the reference style to a style transfer model. The style transfer model transforms a style of the first image based on the reference style, and outputs a result obtained by performing the style transfer on the first image. The style transfer model may be any model. The style transfer model is not limited in this embodiment of this application. For example, the style transfer model may be the PhotoNet (photoNet) auto-encoder or the like in the Ultrafast Photorealistic Style Transfer via Neural Architecture Search (Ultrafast Photorealistic Style Transfer via Neural Architecture Search) article.

Optionally, the reference style indicates appearance information obtained by performing the style transfer on the to-be-transferred object. The appearance information includes one or more of a color, a texture, brightness, or illumination. This is merely an example of the appearance information. Specific content of the appearance information is not limited in this embodiment of this application.

The reference style input by the user may be represented by using a reference style image. There may be one or more reference style images. The reference style image may also be referred to as a style example image. The reference style input by the user may alternatively be text information or the like. For example, the reference style is red.

Step 602: Determine the contour information of the to-be-transferred object in the sub-image.

In this embodiment, after obtaining the sub-image, the AI platform determines the contour information of the to-be-transferred object in the sub-image by using a general object detection algorithm. The general object detection algorithm herein refers to an algorithm that can detect any object in an image.

Step 603: Perform the style transfer on the to-be-transferred object in the first image based on the contour information and the reference style, to obtain a second image, where a background area of the second image is the same as that of the first image, and the background area is an area other than the to-be-transferred object in the first image.

In this embodiment, the second image is obtained by performing the style transfer on the to-be-transferred object in the first image. The second image includes a result obtained by transferring the to-be-transferred object, and the background area does not change. For example, the color of the safety helmet in the first image is red, a color of a safety helmet in the second image is white, and the background area does not change.

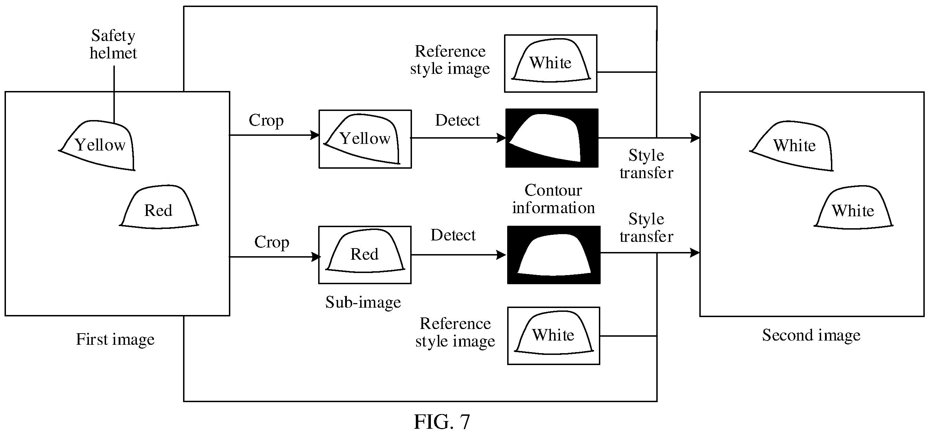

According to the procedure shown in FIG. 6, the sub-image including the to-be-transferred object is obtained from the image through cropping, the contour information of the to-be-transferred object is obtained from the sub-image, and the style transfer is performed on the to-be-transferred object in the first image based on the contour information and the reference style, to obtain the second image obtained through the transfer. Refer to FIG. 7. For example, a first image includes two persons wearing a red safety helmet and a yellow safety helmet, a sub-image including the yellow safety helmet and a sub-image including the red safety helmet are obtained through cropping, and contour information is respectively extracted from the sub-images. A reference style image is an image including a white safety helmet. Then, style transfer is performed on the red safety helmet and the yellow safety helmet in the first image by using the image including the white safety helmet and the contour information, to obtain a second image. The second image includes two persons both wearing the white safety helmet. In this way, the style transfer is only performed on to-be-transferred object, and the style transfer is not performed on a background area. Therefore, the obtained second image is realistic, and quality of data is good. In FIG. 7, only the safety helmets are shown, and the persons and background information are not shown.

The following describes the procedure shown in FIG. 6.

For step 601, the sub-image of the first image can be obtained in a plurality of manners, and the following provides three feasible manners.

Manner 1: When label information of the to-be-transferred object exists in the first image, the label information includes location information of a selection box of the to-be-transferred object. The AI platform obtains the sub-image of the first image from the first image through cropping based on the location information. In this way, the sub-image can be obtained without user participation.

Manner 2: When there is a detection model of the to-be-transferred object, the AI platform obtains the detection model, inputs the first image into the detection model, to obtain location information of a selection box of the to-be-transferred object in the first image. The AI platform obtains the sub-image of the first image from the first image through cropping based on the location information. In this way, detection can be directly performed by using the detection model, and the sub-image can be obtained without user participation.

Manner 3: The user labels a small quantity of sample images including the to-be-transferred object, to obtain location information of a selection box of the to-be-transferred object in the first image based on the sample image labeled by the user. For example, a processing process includes: sending an unlabeled sample image to the terminal, where the sample image includes an object whose type is the same as that of the to-be-transferred object; receiving label information that is sent by the terminal and that is added by the user to the object in the sample image; determining the location information of the selection box of the to-be-transferred object in the first image based on the sample image and the label information; and obtaining the sub-image from the first image through cropping based on the location information of the selection box.

The sample image may belong to the object dataset shown in FIG. 5.

In this embodiment, the user uploads an object dataset to the AI platform, and wants to perform style transfer on a to-be-transferred object of each image in the object dataset. Each image includes a same to-be-transferred object, and each image in the object dataset does not have label information of the to-be-transferred object. The first image belongs to the object dataset. The AI platform sends a small part of images in the object dataset to the terminal, where the small part of images are referred to as sample images. A quantity of sample images is less than a first threshold, and the first threshold may be set to 50 or the like. The user may label the small quantity of sample images by using a user interaction module 101. The AI platform obtains label information of the small quantity of sample images. The label information includes the location information of the selection box of the to-be-transferred object.

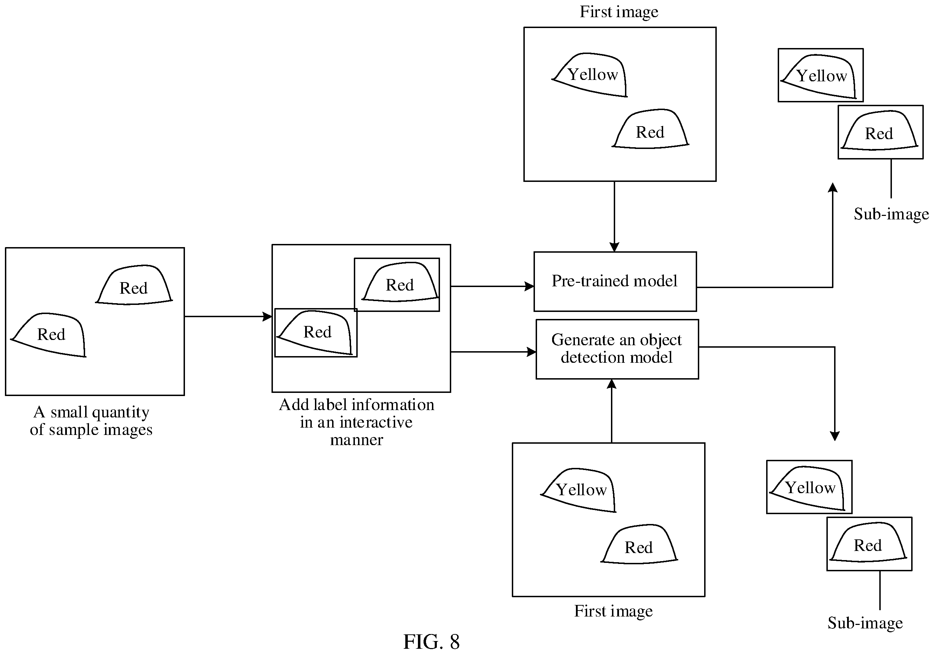

Refer to FIG. 8. Two manners of obtaining the location information of the selection box of the to-be-transferred object are provided. As shown in FIG. 8, in an implementation, the AI platform uses the sample image and the label information of the sample image to generate an object detection model by using a few-shot learning technology. The AI platform inputs the first image to the object detection model, to obtain the location information of the selection box of the to-be-transferred object in the first image. In another implementation, the AI platform generates a pre-trained model by using a public dataset, and determines the location information of the selection box of the to-be-transferred object in the first image based on the pre-trained model and the label information of the sample image.

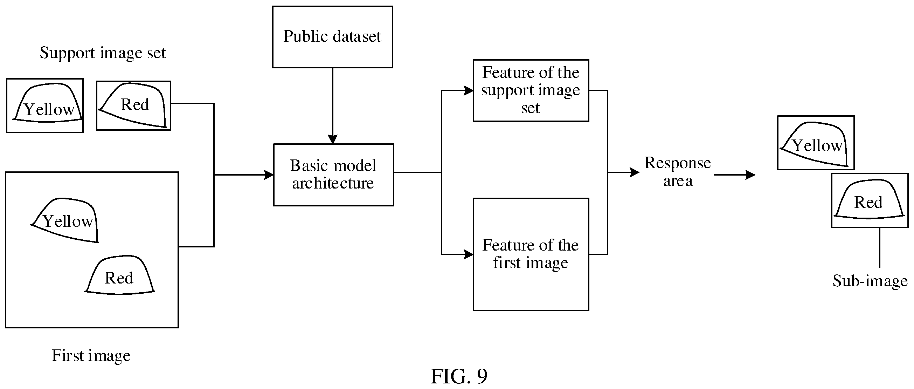

For example, for a manner of determining the location information of the selection box based on the pre-trained model, refer to FIG. 9. As shown in FIG. 9, the AI platform first trains a basic model architecture based on a public dataset (such as an object (object, OBJ) 365 dataset, a common objects in context (common objects in context, COCO) dataset, a Pascal visual object classes (visual object classes, VOC) dataset, or the like) of object detection, to obtain a pre-trained model. Because the public dataset does not include a category of the to-be-transferred object, the pre-trained model cannot be directly used to identify the to-be-transferred object. However, the pre-trained model is obtained by training a large amount of data. Therefore, the pre-trained model has a general feature extraction capability. The AI platform obtains the sub-image including the to-be-transferred object from the sample image through cropping based on the label information of the sample image. These sub-images form a support image set. The AI platform separately inputs the sub-image in the support image set into the pre-trained model, and extracts a feature of each sub-image in the support image set. In addition, the AI platform also inputs a first image into the pre-trained model, extracts a feature of the first image, calculates a response value between the feature of each sub-image in the support image set and the feature of the first image, and calculates a response area in which the response value is greater than a response threshold. If there is one response area in which the response value between the feature of each sub-image and the feature of the first image is greater than the response threshold, a union set of areas in which response values between features of all sub-images in the support image set and the feature of the first image is calculated, and a result of the union set is determined as the location information of the selection box of the to-be-transferred object. If there are a plurality of response areas in which the response value between the feature of each sub-image and the feature of the first image is greater than the response threshold, response areas that belong to the same to-be-transferred object are determined by using distances between response areas. A union set of the response areas that belong to the same to-be-transferred object is calculated, and results of a plurality of calculated union sets are respectively determined as location information of selection boxes of a plurality of to-be-transferred objects. Alternatively, an average feature of features of all sub-images in the support image set is calculated, a response value between the average feature and a feature of the first image is calculated, and the response area in which the response value is greater than a response threshold is calculated. The response area in which the response value is greater than the response threshold is determined as the location information of the selection box of the to-be-transferred object. Herein, if there are a plurality of to-be-transferred objects, a plurality of response areas exist.

Then, the AI platform obtains the sub-image from the first image through cropping based on the location information of the selection box.

In Manner 3, the user only needs to label the small quantity of sample images, so that the location information of the selection box of the to-be-transferred object in the unlabeled image in the object dataset can be identified. Therefore, human resources can be saved.

For step 602, the general object detection algorithm may be a salient object detection model. The processing includes: performing salient object detection on the sub-image, to obtain the contour information of the to-be-transferred object in the sub-image.

In this embodiment, the AI platform inputs the sub-image into the salient object detection model, and the salient object detection model outputs location information of a salient area in the sub-image. Because the sub-image only includes the to-be-transferred object, the salient area is an area in which the to-be-transferred object is located. In this way, because a detection result of the salient object detection model is a pixel-level detection result, the contour information of the to-be-transferred object can be accurately obtained. In addition, because the salient object detection model detects the salient area in the sub-image instead of a specified object, contour information of any object can be identified. Therefore, universality of image style transfer in this embodiment of this application is good.

It should be noted that a specific structure of the salient object detection model is not limited in this embodiment of this application. For example, the salient object detection model is a stacked cross refinement network (stacked cross refinement network, SCRN) model.

For step 603, the second image is obtained in a plurality of manners, and the following provides two feasible manners.

Manner 1: The style transfer is performed on the to-be-transferred object in the sub-image based on the contour information and the reference style, to obtain a locally style-transferred image corresponding to the sub-image. The locally style-transferred image is pasted to the first image, to obtain the second image.

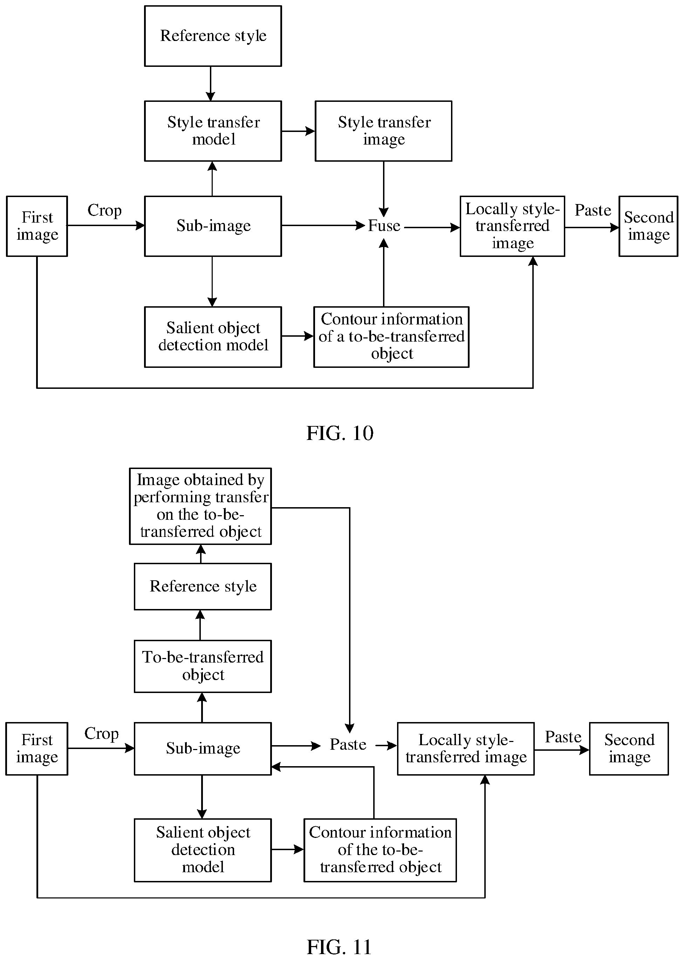

In this embodiment, FIG. 10 shows a style transfer process. The AI platform obtains a style transfer model, and inputs the reference style and the sub-image into the style transfer model, to obtain an output. The output is a style-transferred image corresponding to the sub-image. The style-transferred image is obtained by performing the style transfer on the entire sub-image, and the style-transferred image may be considered as a globally style-transferred image of the sub-image. The AI platform determines, based on the contour information of the to-be-transferred object, an area in the sub-image other than an area indicated by the contour information, and covers the style-transferred image with the determined area, to obtain the locally style-transferred image corresponding to the sub-image. Then, the AI platform pastes the locally style-transferred image back to the first image based on location information of the sub-image in the first image, to obtain the second image. The location information is the location information of the selection box of the to-be-transferred object.

It should be noted that the area indicated by the contour information of the to-be-transferred object may be considered as a mask. When the sub-image is fused with the style-transferred image, an area covered by the mask in the style-transferred image and the area other than the mask in the sub-image are combined, to obtain the locally style-transferred image. For example, it is assumed that the sub-image is X, the mask is M, the style-transferred image is Y, and the locally style-transferred image is $Z=X(1-M)+YM$.

Alternatively, FIG. 11 shows another style transfer process. The AI platform obtains an image of the to-be-transferred object from the sub-image through cropping based on the contour information. The AI platform obtains a style transfer model, inputs the image of the to-be-transferred object and the reference style into the style transfer model, to obtain an image obtained by performing the transfer on the to-be-transferred object, and pastes the image obtained through the transfer on the to-be-transferred object back to the sub-image based on the contour information of the to-be-transferred object in the sub-image, to obtain a locally style-transferred image corresponding to the sub-image. The locally style-transferred image is obtained by only performing the transfer on the to-be-transferred object. Then, the AI platform pastes the locally style-transferred image back to the first image based on location information of the sub-image in the first image. The location information is the location information of the selection box of the to-be-transferred object, to obtain the second image.

Manner 2: The AI platform obtains an image of the to-be-transferred object from the first image through cropping based on the contour information of the to-be-transferred object. The AI platform obtains a style transfer model, and inputs the image of the to-be-transferred object and the reference style into the style transfer model, to obtain an image obtained by performing the transfer on the to-be-transferred object. The AI platform pastes the image obtained by performing the transfer on the to-be-transferred object back to the first image based on location information of the to-be-transferred object in the first image, to obtain the second image. The location information is obtained based on the location information of the selection box of the to-be-transferred object and the contour information of the to-be-transferred object.

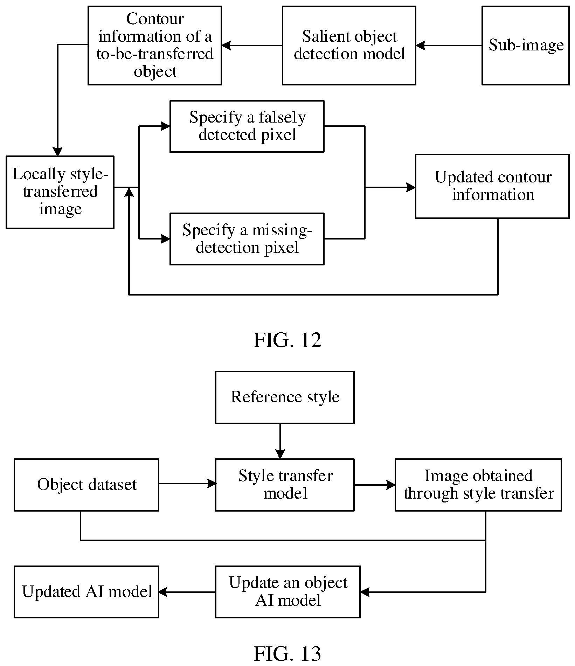

In a possible implementation, when a salient object detection model is used to determine the contour information of the to-be-transferred object, an error may exist in output contour information. In addition, when the style transfer model is used, an error may also exist in a result output by the style transfer model. In this embodiment of this application, a user may further correct the locally style-transferred image of the sub-image in an interactive manner. For a processing process, refer to FIG. 12. As shown in FIG. 12, the locally style-transferred image is sent to the terminal. Pixel correction information that is sent by the terminal and that is used by the user to correct an area in which the style transfer occurs in the locally style-transferred image. The pixel correction information includes at least one of a missing-detection pixel and a falsely detected pixel. The locally style-transferred image is corrected based on the pixel correction information, to obtain an updated locally style-transferred image. The updated locally style-transferred image is pasted to the first image, to obtain an updated second image.

In this embodiment, the AI platform may send the locally style-transferred image to the terminal, and provide mouse clicking, line drawing, voice, touch, or another correction manner. The terminal displays the locally style-transferred image, and displays a correction manner. The user may select, from the area in which the style transfer occurs in the locally style-transferred image, the pixel missing the detection and the falsely detected pixel in the correction manner. The pixel missing the detection includes a pixel that is originally a pixel of the to-be-transferred object but is identified as a pixel of background. The falsely detected pixel includes a pixel that is originally a pixel of the background but is identified as a pixel of the to-be-transferred object. The background is an area other than the to-be-transferred object in the sub-image. After the user completes the correction, the terminal sends the pixel correction information to the AI platform. The AI platform receives the pixel correction information. The pixel correction information includes at least one of the pixel missing the detection and the falsely detected pixel.

Then, the AI platform may correct the locally style-transferred image based on the pixel correction information, to obtain the updated locally style-transferred image. The AI platform pastes the updated locally style-transferred image back to the first image based on the location information of the sub-image in the first image, to obtain the second image. The location information is the location information of the selection box of the to-be-transferred object.

For example, to improve efficiency of correcting the locally style-transferred image by the user, when confidence corresponding to the locally style-transferred image is less than a second threshold, the locally style-transferred image may be provided to the user. The processing process includes: obtaining the confidence of the locally style-transferred image, where the confidence is obtained based on at least one of confidence of the contour information of the to-be-transferred object and confidence of the style-transferred image corresponding to the sub-image; and when the confidence of the locally style-transferred image is less than the second threshold, sending the locally style-transferred image to the terminal.

In this embodiment, the confidence of the locally style-transferred image may be obtained based on at least one of first confidence and second confidence. The first confidence is the confidence of the contour information of the to-be-transferred object, and the second confidence is the confidence of the style-transferred image corresponding to the sub-image. The contour information of the to-be-transferred object may be output by the salient object detection model. In other words, the salient object detection model outputs the contour information of the to-be-transferred object and the first confidence. The confidence of the style-transferred image may be output by the style transfer model. In other words, the style transfer model can output the style-transferred image and the second confidence. In an implementation, the salient object detection model outputs the contour information of the to-be-transferred object, and the contour information is directly associated with whether the to-be-transferred object is accurately identified. Therefore, only the first confidence may be considered for the confidence of the locally style-transferred image. In another implementation, because the style-transferred image corresponding to the sub-image also affects an effect of the locally style-transferred image, the first confidence and the second confidence may be considered for the confidence of the locally style-transferred image. Specifically, the first confidence and the second confidence may be weighted to obtain the confidence of the locally style-transferred image. During actual application, because the detection result of the salient object detection model has greater impact on the locally style-transferred image, a weight of the first confidence may be set to be greater than a weight of the second confidence. In another implementation, only the confidence of the style-transferred image corresponding to the sub-image may be considered, and the second confidence may be determined as the confidence of the locally style-transferred image.

The AI platform may determine whether the confidence of the locally style-transferred image is less than the second threshold. When the confidence is less than the second threshold, the AI platform sends the locally style-transferred image to the terminal.

For example, the confidence output by the salient object detection model may be obtained based on a result of Formula (1).

$$E(M) = \frac{1}{N} \sum_i -\log v_i \qquad (1)$$

In Formula (1), $E(M)$ represents an entropy value of an area in which the sub-image is located. $N$ is a quantity of pixels in the sub-image. $v_i$ represents a value of an $i^{th}$ pixel in the area. A value of each pixel in the area ranges from 0 to 1, and includes 0 and 1. When a value of a pixel is 0, it indicates that the pixel belongs to the background area. When a value of a pixel is 1, it indicates that the pixel belongs to the to-be-transferred object. When a value of a pixel is 0.5, it indicates that a result of identifying the pixel by the salient object detection model is inaccurate. A negation operation is performed on a value less than 0.5 for normalization. To be specific, the value is subtracted from 1. For example, a value of a pixel is 0.3, and the value becomes 0.7 after the negation operation. In this way, for a pixel $v_i$ whose value is less than 0.5, the value is subtracted from 1. The negation operation herein may magnify an inaccurate identification result, so that the confidence can be more accurately reflected.

The confidence output by the salient object detection model is negatively correlated with the entropy value. To be specific, a larger entropy value indicates lower confidence, and a smaller entropy value indicates higher confidence. For example, the confidence output by the salient object detection model is equal to a reciprocal of the entropy value.

For example, the user may choose whether to correct the local style image. The processing includes: sending the second image to the terminal; and when a selection instruction of the to-be-transferred object in the second image sent by the terminal is received, sending the locally style-transferred image to the terminal.

In this embodiment, after obtaining the second image, the AI platform may send the second image to the terminal. The terminal receives the second image, and displays the second image. The user may browse the second image, and determine whether a transfer result of the to-be-transferred object is accurate. When considering that the transfer result of the to-be-transferred object is inaccurate, the user may select the to-be-transferred object in the second image by using a mouse. The terminal sends the selection instruction of the to-be-transferred object to the AI platform. The AI platform receives the selection instruction of the to-be-transferred object, and sends the locally style-transferred image to the terminal.

Alternatively, after obtaining the second image, the AI platform may send the second image to the terminal, and send an option of the to-be-transferred object to the terminal. When considering that a transfer result of the to-be-transferred object is inaccurate, the user may select the option of the to-be-transferred object by using a mouse. The terminal sends the selection instruction of the to-be-transferred object to the AI platform. The AI platform receives the selection instruction of the to-be-transferred object, and sends the locally style-transferred image to the terminal.

In addition, after obtaining the locally style-transferred image, the AI platform first displays the locally style-transferred image to the user. After the user corrects the locally style-transferred image, the locally style-transferred image is pasted to the first image, to obtain a final style transfer result corresponding to the first image.

For example, processing of obtaining the updated locally style-transferred image based on the pixel correction information includes: updating the contour information of the to-be-transferred object based on the pixel correction information, to obtain updated contour information; and fusing, based on the updated contour information, the globally style-transferred image corresponding to the sub-image and the sub-image, to obtain the updated locally style-transferred image.

In this embodiment, the pixel correction information includes the at least one of the pixel missing the detection and the falsely detected pixel, and the AI platform may update the contour information of the to-be-transferred object by using a distance function. An expression of the distance function is:

$$d\left(p_1, p_2\right) = \left(r_1 - r_2\right)^2 + \left(g_1 - g_2\right)^2 + \left(b_1 - b_2\right)^2 + \left(x_1 - x_2\right)^2 + \left(y_1 - y_2\right)^2 \qquad (2)$$

In Formula (2), $d(p_1, p_2)$ represents a distance between a pixel $p_1$ and a pixel $p_2$. $r_1$, $g_1$, and $b_1$ respectively represent a red pixel value, a green pixel value, and a blue pixel value of the pixel $p_1$. $r_2$, $g_2$, $b_2$ respectively represent a red pixel value, a green pixel value, and a blue pixel value of the pixel $p_2$. $(x_1, y_1)$ represents location coordinates of the pixel $p_1$ in the sub-image, and $(x_2, y_2)$ represents location coordinates of the pixel $p_2$ in the sub-image. Formula (2) is a possible expression of the distance function. This is not limited in this embodiment of this application. For example, the expression of the distance function may alternatively be:

$$d\left(p_1, p_2\right) = \sqrt{\left(r_1 - r_2\right)^2 + \left(g_1 - g_2\right)^2 + \left(b_1 - b_2\right)^2 + \left(x_1 - x_2\right)^2 + \left(y_1 - y_2\right)^2} \qquad (3)$$

If the pixel $p_1$ belongs to the pixel missing the detection selected by the user, the pixel $p_2$ is a pixel that belongs to the background area in the sub-image. The distance d $(p_1, p_2)$ between the pixel $p_1$ and the pixel $p_2$ is determined, and whether the distance is less than a first threshold is determined. If the distance is less than the first threshold, the pixel $p_2$ is corrected as a missing-detection pixel. Alternatively, if the distance is greater than or equal to the first threshold, the pixel $p_2$ is not corrected. In this way, the pixel missing the detection in the sub-image can be determined, and it is determined that the pixel missing the detection belongs to the to-be-transferred object.

If the pixel $p_1$ belongs to the falsely detected pixel selected by the user, the pixel $p_2$ is a pixel that belongs to a foreground area in the sub-image. The distance $d(p_1, p_2)$ between the pixel $p_1$ and the pixel $p_2$ is determined, and whether the distance is less than a second threshold is determined. If the distance is less than the second threshold, the pixel $p_2$ is corrected as a falsely detected pixel. Alternatively, if the distance is greater than or equal to the second threshold, the pixel $p_2$ is not corrected. In this way, the falsely detected pixel in the sub-image can be determined, and it is determined that the falsely detected pixel belongs to the background area.

In this way, after a category to which the pixel in the sub-image belong is corrected based on the distance function, a contour of an area formed by the pixel that belongs to the to-be-transferred object is determined as the updated contour information. Then, the AI platform determines, based on the updated contour information, an area in the sub-image other than an area indicated by the contour information, and covers the globally style-transferred image with the area in the sub-image other than the area indicated by the contour information, to obtain the locally style-transferred image corresponding to the sub-image. Then, the AI platform pastes the locally style-transferred image back to the first image based on the location information of the sub-image in the first image, to obtain the updated second image.

For example, to make the updated contour information more accurate, after the updated contour information is determined, the updated contour information may be sent to the terminal. Refer to FIG. 12. If the user determines that the updated contour information is accurate, the second image is updated based on the contour information. An update procedure is described in the previous paragraph. If the user determines that the updated contour information is inaccurate, pixel correction continues to be performed. The AI platform continues to obtain the pixel correction information, and repeatedly updates the contour information of the to-be-transferred object based on the distance function until the user determines that the updated contour information is accurate.

In this way, interactive pixel correction is provided in this embodiment of this application, so that an image obtained through style transfer is more accurate.

In addition, after a plurality of pieces of updated contour information are obtained, the salient object detection model may be updated.

In this embodiment of this application, after the image obtained through the style transfer is obtained, there may be a plurality of application scenarios. The application scenario is not limited in this embodiment of this application. For example, an AI model is optimized. For another example, an artistic effect of the image obtained through the style transfer is displayed.

This application provides an example of a possible application scenario. An AI model is updated by using the image obtained through the style transfer, so that an updated AI model can also detect or identify the image obtained through the style transfer.

The processing includes: updating an object AI model based on the second image, to obtain the updated AI model, where the object AI model is configured to detect or identify the to-be-transferred object in the first image, and the updated AI model is configured to detect or identify a to-be-transferred object obtained through the style transfer in the second image.

In this embodiment, the AI platform obtains the object AI model, and the object AI model is obtained through training based on the object dataset. The AI platform updates the object AI model by using the second image, to obtain the updated AI model. The updated AI model may detect or identify a style-transformed object in the second image.

This application provides an example of another possible application scenario. An object AI model is updated by using the image obtained through the style transfer and the object dataset, so that an updated AI model can detect or identify an object obtained through the style transfer and an object before the style transfer.

The processing includes: The AI platform obtains the object AI model, and the object AI model is obtained through training based on the object dataset. The second image and the object dataset form a new dataset. The object AI model is updated by using the new dataset, to obtain the updated AI model, so that the updated AI model can detect or identify the object before the style transfer and the object after the style transfer. In this way, the AI model can better adapt to a scenario of the image obtained through the style transfer, and performance of the AI model in a scenario of the original object dataset is not affected.

It should be noted that, to obtain a more accurate AI model, the object AI model may be updated after a plurality of images obtained through the style transfer are obtained. An object included in the plurality of images obtained through the style transfer is the same as an object included in the first image. Refer to FIG. 13. A process of updating an AI model is provided. As shown in FIG. 13, after style transfer is performed on images in an object dataset, a plurality of images obtained through the style transfer are obtained. An object AI model is updated based on the object dataset and the plurality of images obtained through the style transfer, to obtain an updated AI model. The updated AI model can be used in both the object dataset and the image obtained through the style transfer. Herein, when the AI model is updated, an image obtained by performing the style transfer on an entire first image may further be used. In addition, when the AI model is updated, an updated second image may be used, or a second image before the update may be used.

In this way, a plurality of images in a scenario can be obtained by using only a small quantity of reference style images in the scenario, and the AI model is updated by using the plurality of images, so that the AI model can adapt to the scenario. In addition, the AI model is updated by using style images of different scenarios, so that a generalization capability of the AI model can be improved in different scenarios.

For example, in an infrared scenario, for an effect gain of a head-shoulder and vehicle object detection model, refer to Table 1. For a model obtained through training by using an RGB image, detection accuracy of the model for an RGB test set is 88.5%, and detection accuracy of the model for an infrared test set is 79.29%. After the model is updated by using the RGB images and a plurality of infrared images obtained through style transfer, detection accuracy of the updated model for the RGB test set is 88.3%, and detection accuracy of the updated model for the infrared test set is increased to 83.53%.

**Table 1**

| Training set | RGB test set | Infrared test set |
|---|---|---|
| RGB image | 88.5% | 79.29% |
| RGB image+the plurality of infrared images obtained through the style transfer | 88.3% | 83.53% |

For another example, in a night scenario, for an effect gain of a vehicle object detection model, refer to Table 2. For a model obtained through training by using a daytime image, detection accuracy of the model for a daytime image test set is 93.36%, and detection accuracy of the model for a night image test set is 72.14%. After the model is updated by using the daytime image and a plurality of night images obtained through style transfer, detection accuracy of the updated model for the daytime image test set is 93.63%, and detection accuracy of the updated model for the night image test set is increased to 75.76%.

**Table 2**

| Training set | Daytime image test set | Night image test set |
|---|---|---|
| Daytime image | 93.36% | 72.14% |
| Day image+the plurality of night images obtained through the style transfer | 93.63% | 75.76% |

For another example, in a safety helmet detection task, for an effect gain of a safety helmet object detection model, refer to Table 3. For a model obtained through training by using a non-blue safety helmet image, detection accuracy of the model for a safety helmet comprehensive test set is 61.1%, and detection accuracy of the model for a blue safety helmet test set is 58.61%. After the model is updated by using the non-blue safety helmet image and a plurality of blue safety helmet images obtained through style transfer, detection accuracy of the updated model for the safety helmet comprehensive test set is 62.2%, and detection accuracy of the updated model for the blue safety helmet test set is increased to 63.35%. The safety helmet comprehensive test set includes safety helmets in colors other than blue.

**Table 3**

| Training set | Safety helmet comprehensive test set | Blue safety helmet test set |
|---|---|---|
| Non-blue safety helmet image | 61.1% | 58.61% |
| Non-blue safety helmet image+the plurality of blue safety helmet images obtained through the style transfer | 62.2% | 63.35% |

In this embodiment of this application, global style transfer may be selected, or local style transfer may be selected based on a selection operation of the user. In addition, the general object detection algorithm is used, so that style transfer can be performed on a refined local area. This improves quality of generated data. Moreover, the general object detection algorithm is used to detect the salient object, and is not related to a category of a specific object. Therefore, the general object detection algorithm is applicable to general object detection, and has high generalization.

In addition, in this embodiment of this application, a human-machine interaction collaboration mechanism is used, to more flexibly meet a requirement of the user during use. In an aspect, the user may customize an expected area on which the style transfer is performed in an interactive manner. In addition, the user may select the small quantity of sample images in an interactive manner, and complete customized selection of an object of a large quantity of images based on the small quantity of sample images. This saves human resources. In another aspect, for the pixel that is falsely identified, the pixel that is falsely identified can be corrected in a human-machine collaboration manner.

The following describes an apparatus provided in an embodiment of this application.

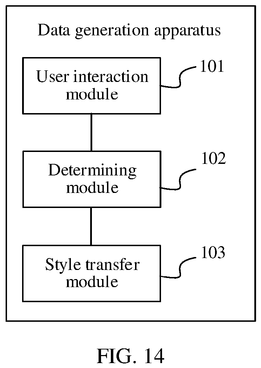

FIG. 14 is a structural diagram of a data generation apparatus according to an embodiment of this application. The apparatus may be implemented as a part or all of the apparatus by using software, hardware, or a combination thereof. The apparatus provided in this embodiment of this application can implement the procedure shown in FIG. 6 in embodiments of this application. The apparatus includes a user interaction module 101, a determining module 102, and a style transfer module 103.

The user interaction module 101 is configured to obtain a sub-image of a first image, where the sub-image includes a to-be-transferred object obtained from the first image through cropping, and may be specifically configured to implement an interaction function in step 601 and perform an implicit step included in step 601.

The determining module 102 is configured to determine contour information of the to-be-transferred object in the sub-image, and may be specifically configured to implement a determining function in step 602 and perform an implicit step included in step 602.

The style transfer module 103 is configured to perform style transfer on the to-be-transferred object in the first image based on the contour information and a reference style, to obtain a second image, where a background area of the second image is the same as that of the first image, and the background area is an area other than the to-be-transferred object in the first image, and may be specifically configured to implement a style transfer function in step 603 and perform an implicit step included in step 603.

In a possible implementation, the reference style indicates appearance information obtained by performing the style transfer on the to-be-transferred object. The appearance information includes one or more of a color, a texture, brightness, or illumination.

In a possible implementation, the user interaction module 101 is configured to:

send an unlabeled sample image to a terminal, where the sample image includes an object whose type is the same as that of the to-be-transferred object;
receive label information that is sent by the terminal and that is added by a user to the object in the sample image;
determine location information of a selection box of the to-be-transferred object in the first image based on the sample image and the label information; and
obtain the sub-image from the first image through cropping based on the location information of the selection box.

In a possible implementation, the determining module 102 is configured to:
perform salient object detection on the sub-image, to obtain the contour information of the to-be-transferred object in the sub-image.

In a possible implementation, the style transfer module 103 is configured to:

perform the style transfer on the to-be-transferred object in the sub-image based on the contour information and the reference style, to obtain a locally style-transferred image corresponding to the sub-image; and

paste the locally style-transferred image to the first image, to obtain the second image.

In a possible implementation, the style transfer module 103 is configured to:

perform the style transfer on the sub-image based on the reference style, to obtain a style-transferred image corresponding to the sub-image; and

fuse the style-transferred image corresponding to the sub-image and the sub-image based on the contour information, to obtain the locally style-transferred image corresponding to the sub-image, where the style transfer occurs in an area indicated by the contour information in the locally style-transferred image.

In a possible implementation, the user interaction module 101 is further configured to:

send the locally style-transferred image to the terminal; and

obtain pixel correction information that is sent by the terminal and that is used by the user to correct the area in which the style transfer occurs in the locally style-transferred image, where the pixel correction information includes at least one of a missing-detection pixel and a falsely detected pixel.

The style transfer module 103 is further configured to:

correct the locally style-transferred image based on the pixel correction information, to obtain an updated locally style-transferred image; and

paste the updated locally style-transferred image to the first image, to obtain an updated second image.

In a possible implementation, the style transfer module 103 is further configured to:

update the contour information of the to-be-transferred object based on the pixel correction information, to obtain updated contour information; and

fuse, based on the updated contour information, the style-transferred image corresponding to the sub-image and the sub-image, to obtain the updated locally style-transferred image.

In a possible implementation, the user interaction module 101 is further configured to:

obtain confidence of the locally style-transferred image, where the confidence is obtained based on at least one of confidence of the contour information of the to-be-transferred object and confidence of the style-transferred image corresponding to the sub-image; and

determine that the confidence of the locally style-transferred image is less than a second threshold, and send the locally style-transferred image to the terminal.

In a possible implementation, the user interaction module 101 is further configured to:

send the second image to the terminal; and

when a selection instruction of the to-be-transferred object in the second image sent by the terminal is received, send the locally style-transferred image to the terminal.

For a detailed process of generating data by the data generation apparatus shown in FIG. 14, refer to descriptions of the foregoing embodiments. Details are not described herein again. The data generation apparatus shown in FIG. 14 may be an AI platform 100.

In some embodiments, a computer program product is provided. The computer program product includes computer instructions, and the computer instructions are stored in a computer-readable storage medium. A processor of a computer device reads the computer instructions from the computer-readable storage medium, the processor executes the computer instructions, to enable the computer device to perform the procedure shown in FIG. 6.

A person of ordinary skill in the art may be aware that, the method steps and units described with reference to embodiments disclosed in this application may be implemented by electronic hardware, computer software, or a combination thereof. To clearly describe interchangeability between the hardware and the software, the foregoing descriptions have generally described steps and compositions of embodiments according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

In several embodiments provided in this application, it should be understood that the disclosed system architecture, apparatus, and method may be implemented in another manner. For example, the described apparatus embodiment is merely an example. For example, the module division is merely logical function division and may be another division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, to be specific, may be located at one position, or may be distributed on a plurality of network modules. A part or all of the modules may be selected based on actual requirements to implement the objectives of the solutions of embodiments of this application.

In addition, modules in embodiments of this application may be integrated into one processing module, or each module may exist alone physically, or two or more modules may be integrated into one module. The integrated module may be implemented in a form of hardware, or may be implemented in a form of a software module.

When the integrated module is implemented in a form of a software functional module and sold or used as an independent product, the integrated module may be stored in a computer-readable storage medium. Based on this understanding, the technical solutions of this application essentially, or the part contributing to conventional technologies, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the method in embodiments of this application. The foregoing storage medium includes any medium that can store program code, such as a USB flash drive, a removable hard disk, a ROM, a RAM, a magnetic disk, an optical disc, or the like.

In this application, terms such as "first", "second", and the like are used to distinguish between same items or similar items that have basically same purposes and functions. It should be understood that there is no logical or time-sequential dependency between "first" and "second", and a quantity and an execution sequence are not limited. It should also be understood that although the following descriptions use the terms such as "first", "second", and the like to describe various elements, these elements should not be limited by the terms. The terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

A term "at least one" in this application means one or more, and a term "a plurality of" in this application means two or more.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data generation method, wherein the method comprises:

   obtaining a sub-image of a first image, wherein the sub-image comprises a to-be-transferred object obtained from the first image through cropping;
   determining contour information of the to-be-transferred object in the sub-image; and
   performing style transfer on the to-be-transferred object in the first image based on the contour information and a reference style, to obtain a second image, wherein a background area of the second image is the same as that of the first image, and the background area is an area other than the to-be-transferred object in the first image.

2. The method according to claim 1, wherein the reference style indicates appearance information obtained by performing the style transfer on the to-be-transferred object, and the appearance information comprises one or more of a color, a texture, brightness, or illumination.

3. The method according to claim 1 or 2, wherein the obtaining a sub-image of a first image comprises:

sending an unlabeled sample image to a terminal, wherein the sample image comprises an object whose type is the same as that of the to-be-transferred object;

receiving label information that is sent by the terminal and that is added by a user to the object in the sample image;

determining location information of a selection box of the to-be-transferred object in the first image based on the sample image and the label information; and

obtaining the sub-image from the first image through cropping based on the location information of the selection box.

4. The method according to any one of claims 1 to 3, wherein the determining contour information of the to-be-transferred object in the sub-image comprises:

performing salient object detection on the sub-image, to obtain the contour information of the to-be-transferred object in the sub-image.

5. The method according to any one of claims 1 to 4, wherein the performing style transfer on the to-be-transferred object in the first image based on the contour information and a reference style, to obtain a second image comprises:

performing the style transfer on the to-be-transferred object in the sub-image based on the contour information and the reference style, to obtain a locally style-transferred image corresponding to the sub-image; and

pasting the locally style-transferred image to the first image, to obtain the second image.

6. The method according to claim 5, wherein the performing the style transfer on the to-be-transferred object in the sub-image based on the contour information and the reference style, to obtain a locally style-transferred image corresponding to the sub-image comprises:

performing the style transfer on the sub-image based on the reference style, to obtain a style-transferred image corresponding to the sub-image; and

fusing the style-transferred image corresponding to the sub-image and the sub-image based on the contour information, to obtain the locally style-transferred image corresponding to the sub-image, wherein the style transfer occurs in an area indicated by the contour information in the locally style-transferred image.

7. The method according to claim 5 or 6, wherein the method further comprises:

sending the locally style-transferred image to the terminal;

obtaining pixel correction information that is sent by the terminal and that is used by the user to correct the area in which the style transfer occurs in the locally style-transferred image, wherein the pixel correction information comprises at least one of a missing-detection pixel and a falsely detected pixel;

correcting the locally style-transferred image based on the pixel correction information, to obtain an updated locally style-transferred image; and

pasting the updated locally style-transferred image to the first image, to obtain an updated second image.

8. The method according to claim 7, wherein the correcting the locally style-transferred image based on the pixel correction information, to obtain an updated locally style-transferred image comprises:

updating the contour information of the to-be-transferred object based on the pixel correction information, to obtain updated contour information; and

fusing, based on the updated contour information, the style-transferred image corresponding to the sub-image and the sub-image, to obtain the updated locally style-transferred image.

9. The method according to claim 7 or 8, wherein the sending the locally style-transferred image to the terminal comprises:

obtaining confidence of the locally style-transferred image, wherein the confidence is obtained based on at least one of confidence of the contour information of the to-be-transferred object and confidence of the style-transferred image corresponding to the sub-image; and

determining that the confidence of the locally style-transferred image is less than a second threshold, and sending the locally style-transferred image to the terminal.

10. The method according to claim 7 or 8, wherein the sending the locally style-transferred image to the terminal comprises:

sending the second image to the terminal; and
when a selection instruction of the to-be-transferred object in the second image sent by the terminal is received, sending the locally style-transferred image to the terminal.

11. A data generation apparatus, wherein the apparatus comprises:

a user interaction module, configured to obtain a sub-image of a first image, wherein the sub-image comprises a to-be-transferred object obtained from the first image through cropping;
a determining module, configured to determine contour information of the to-be-transferred object in the sub-image; and
a style transfer module, configured to perform style transfer on the to-be-transferred object in the first image based on the contour information and a reference style, to obtain a second image, wherein a background area of the second image is the same as that of the first image, and the background area is an area other than the to-be-transferred object in the first image.

12. The apparatus according to claim 11, wherein the reference style indicates appearance information obtained by performing the style transfer on the to-be-transferred object, and the appearance information comprises one or more of a color, a texture, brightness, or illumination.

13. The apparatus according to claim 11 or 12, wherein the user interaction module is configured to:

send an unlabeled sample image to a terminal, wherein the sample image comprises an object whose type is the same as that of the to-be-transferred object;
receive label information that is sent by the terminal and that is added by a user to the object in the sample image;
determine location information of a selection box of the to-be-transferred object in the first image based on the sample image and the label information; and
obtain the sub-image from the first image through cropping based on the location information of the selection box.

14. The apparatus according to any one of claims 11 to 13, wherein the determining module is configured to:
perform salient object detection on the sub-image, to obtain the contour information of the to-be-transferred object in the sub-image.

15. The apparatus according to any one of claims 11 to 14, wherein the style transfer module is configured to:

perform the style transfer on the to-be-transferred object in the sub-image based on the contour information and the reference style, to obtain a locally style-transferred image corresponding to the sub-image; and
paste the locally style-transferred image to the first image, to obtain the second image.

16. The apparatus according to claim 15, wherein the style transfer module is configured to:

perform the style transfer on the sub-image based on the reference style, to obtain a style-transferred image corresponding to the sub-image; and
fuse the style-transferred image corresponding to the sub-image and the sub-image based on the contour information, to obtain the locally style-transferred image corresponding to the sub-image, wherein the style transfer occurs in an area indicated by the contour information in the locally style-transferred image.

17. The apparatus according to claim 15 or 16, wherein the user interaction module is further configured to:

send the locally style-transferred image to the terminal; and
obtain pixel correction information that is sent by the terminal and that is used by the user to correct the area in which the style transfer occurs in the locally style-transferred image, wherein the pixel correction information comprises at least one of a missing-detection pixel and a falsely detected pixel; and
the style transfer module is further configured to:

correct the locally style-transferred image based on the pixel correction information, to obtain an updated locally style-transferred image; and

paste the updated locally style-transferred image to the first image, to obtain an updated second image.

18. The apparatus according to claim 17, wherein the style transfer module is further configured to:

   update the contour information of the to-be-transferred object based on the pixel correction information, to obtain updated contour information; and
   fuse, based on the updated contour information, the style-transferred image corresponding to the sub-image and the sub-image, to obtain the updated locally style-transferred image.

19. The apparatus according to claim 17 or 18, wherein the user interaction module is further configured to:

   obtain confidence of the locally style-transferred image, wherein the confidence is obtained based on at least one of confidence of the contour information of the to-be-transferred object and confidence of the style-transferred image corresponding to the sub-image; and
   determine that the confidence of the locally style-transferred image is less than a second threshold, and send the locally style-transferred image to the terminal.

20. The apparatus according to claim 17 or 18, wherein the user interaction module is further configured to:

   send the second image to the terminal; and
   when a selection instruction of the to-be-transferred object in the second image sent by the terminal is received, send the locally style-transferred image to the terminal.

21. A computer device, wherein the computer device comprises a memory and a processor, the memory stores computer instructions, and the processor is configured to execute the computer instructions, to enable the computer device to perform the method according to any one of claims 1 to 10.

22. A computer-readable storage medium, wherein the storage medium stores at least one computer instruction, and the computer instruction is read by a processor, to enable a computer device to perform the method according to any one of claims 1 to 10.

FIG. 1

FIG. 2

User

Second image | First image | Reference style

User interaction module 101

First image

Determining module 102

Second image | Contour information of a to-be-transferred object in a sub-image of the first image | Reference style and first image

Style transfer module 103

Second image

FIG. 3

400

403

Memory

Program code
4031

Operating
system

401

Processor

Communication   402
bus

404

Network interface

FIG. 4

User

User interaction
module 101

| Obtain a sub-image | | Correct an image obtained through style transfer |
|---|---|---|

**Obtain a sub-image**

Add label information
of a sample image

Capture a sub-image of
an image in an object
dataset based on the
label information

Reference
style

**Correct an image obtained
through style transfer**

Send the image obtained
through the style transfer
to a terminal

Correct the image
obtained through the
style transfer in an
interactive manner

Identify contour
information of a to-
be-transferred object

Determining module 102

Style transfer module 103

| Object dataset | Style transfer model | Image obtained through the style transfer |
|---|---|---|

Updated AI model

Update an object AI
model

FIG. 5

Obtain a sub-image of a first image, where the sub-image includes a to-be-transferred object obtained from the first image through cropping — 601

Determine contour information of the to-be-transferred object in the sub-image — 602

Perform style transfer on the to-be-transferred object in the first image based on the contour information and a reference style image, to obtain a second image, where a background area of the second image is the same as that of the first image, and the background area is an area other than the to-be-transferred object in the first image — 603

FIG. 6

FIG. 7

First image

Yellow

Red

Yellow

Red

Sub-image

A small quantity
of sample images

Red

Red

Add label information
in an interactive
manner

Red

Red

Pre-trained model

Generate an object
detection model

First image

Yellow

Red

Yellow

Red

Sub-image

FIG. 8

Support image set

Public dataset

Basic model architecture

Feature of the support image set

Feature of the first image

Response area

First image

Sub-image

FIG. 9

```
                    ┌─────────────────┐
                    │  Reference style │
                    └─────────────────┘
                              │
                              ▼
┌─────────┐         ┌─────────────────┐        ┌─────────────────┐
│         │         │  Style transfer  │───────▶│  Style transfer  │
│         │         │      model       │        │      image       │
│         │         └─────────────────┘        └─────────────────┘
```

Reference style

Style transfer model → Style transfer image

First image → Crop → Sub-image → Fuse → Locally style-transferred image → Paste → Second image

Sub-image → Salient object detection model → Contour information of a to-be-transferred object

**FIG. 10**

Image obtained by performing transfer on the to-be-transferred object

Reference style

To-be-transferred object

First image → Crop → Sub-image → Paste → Locally style-transferred image → Paste → Second image

Sub-image → Salient object detection model → Contour information of the to-be-transferred object

**FIG. 11**

Contour information of a to-be-transferred object ← Salient object detection model ← Sub-image

Locally style-transferred image

Specify a falsely detected pixel

Specify a missing-detection pixel

Updated contour information

FIG. 12

Reference style

Object dataset → Style transfer model → Image obtained through style transfer

Updated AI model ← Update an object AI model

FIG. 13

Data generation apparatus

User interaction
module — 101

Determining
module — 102

Style transfer
module — 103

FIG. 14

## INTERNATIONAL SEARCH REPORT

| | International application No. |
|---|---|
| | **PCT/CN2022/124962** |

**A.    CLASSIFICATION OF SUBJECT MATTER**

G06T 3/00(2006.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 分割, 截取, 子图像, 迁移, 目标, 背景, 融合, migration, style, background, cut+, POI

**C.    DOCUMENTS CONSIDERED TO BE RELEVANT**

| Category* | Citation of document, with indication, where appropriate, of the relevant passages | Relevant to claim No. |
|---|---|---|
| X | CN 111210487 A (SHENZHEN ONECONNECT SMART TECHNOLOGY CO., LTD.) 29 May 2020 (2020-05-29)<br>  description, paragraphs [0046]-[0121], and figures 1-11 | 1-22 |
| A | CN 113160033 A (WUHAN TEXTILE UNIVERSITY) 23 July 2021 (2021-07-23)<br>  entire document | 1-22 |
| A | CN 111768335 A (BEIJING TECHNOLOGY AND BUSINESS UNIVERSITY) 13 October 2020 (2020-10-13)<br>  entire document | 1-22 |
| A | WO 2020125505 A1 (LAND AND FIELDS LIMITED) 25 June 2020 (2020-06-25)<br>  entire document | 1-22 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 December 2022** | **21 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/124962**

| Patent document cited in search report | | | Publication date (day/month/year) | Patent family member(s) | Publication date (day/month/year) |
|---|---|---|---|---|---|
| CN | 111210487 | A | 29 May 2020 | None | |
| CN | 113160033 | A | 23 July 2021 | None | |
| CN | 111768335 | A | 13 October 2020 | None | |
| WO | 2020125505 | A1 | 25 June 2020 | None | |

Form PCT/ISA/210 (patent family annex) (January 2015)

**REFERENCES CITED IN THE DESCRIPTION**

**Patent documents cited in the description**

- CN 202210128358